# EUROPEAN PATENT SPECIFICATION

(11) **EP 2 809 607 B1**
(45) Date of publication and mention of the grant of the patent: **15.11.2017**
(21) Application number: 13744245.5
(22) Date of filing: 15.01.2013
(51) Int. Cl.: B66F 9/06, B62B 3/04, B62B 3/06, B66F 9/08, B66F 9/16, B66F 11/04, B66F 9/18

(54) **A METHOD, A DEVICE AND A HOIST FOR HANDLING TYRES**
VERFAHREN, VORRICHTUNG UND HEBEZEUG ZUR BEARBEITUNG VON REIFEN
PROCÉDÉ, DISPOSITIF ET APPAREIL DE LEVAGE POUR LA MANIPULATION DE PNEUMATIQUES

(30) Priority: 01.02.2012 SE 1200065
(43) Date of publication of application: 10.12.2014
(73) Proprietor: Svenska Lagersystem Slab AB, 331 52 Värnamo (SE); Lingeskog, Fredrik, 331 92 Värnamo (SE); Rapp, Lennart, 239 32 Skanör (SE)
(72) Inventor: LINGESKOG, Fredrik, S-331 92 Värnamo (SE); RAPP, Lennart, S-239 32 Skanör (SE)
(74) Representative: Persson, Albin
(86) International application number: PCT/SE2013/050023
(87) International publication number: WO 2013/115705

(56) References cited:
- FR-A1- 2 822 145
- GB-A- 1 103 603
- JP-A- H 092 008
- JP-A- H 092 008
- JP-A- 2002 145 025
- JP-A- 2002 145 025
- JP-U- S51 130 559
- SE-B- 421 204
- US-A- 3 202 242
- US-A- 3 282 374
- US-A1- 2004 265 106
- US-A1- 2007 140 817
- US-A1- 2007 140 817

## Description

### TECHNICAL FIELD

The handling of tyres/wheels generally and storing of snow tyres in store houses in particular is attended to by garages or repair shops. During snow conditions the normally used tyres are stored and handled in a corresponding way. The tyres are stored in an upright position or in a horizontal position in storage racks.

### PRIOR ART

When tyres are stored in the horizontal position it is possible and convenient to use pallet or magazines that are handled by lift trucks. US2004/0265106 discloses a lift truck including grasping means for transporting a vertical stack of tyres in upper and lower sections to provide vision for the driver. A drawback is that lift trucks require a large space to operate between the storage racks. There are advantages of handling and storing tyres in the upright position. The tyres can be rolled to an appropriate position in the rack and it is possible to optimize packaging of the tyres since they have different widths and sizes.

A problem of storing tyres in the upright position is that the tyres have to be handled manually when loading and unloading. Preferably, the tyres should be positioned close to the storage rack before they are rolled into the desired position. According to a presently used method ladders are used to reach high position. Such a method is of course not recommended and definitely is not ergonomic.

It is possible also to use hoists with a lift cage. The tyres are then placed on the bottom of the lift cage and have to be lifted manually from the lift cage to the storage rack and back. A more ergonomic system obviously is desired. A comparatively short distance between storage racks is used to maximise storage capacity. However, such a short distance will highly limit the size and required operating area of a hoist or truck.

### SUMMARY OF THE INVENTION

An object of the invention is to overcome the drawbacks presented above and to provide a tyre lifting apparatus that is more ergonomic and can be used for handling tyres and wheels in garages and store houses. In various embodiments the apparatus will facilitate a manual handling of tyres and wheels when they are placed in and removed from a storage rack. Specifically, the manual handling can be carried out without lifting the wheels and without working in uncomfortable positions.

In various embodiments the apparatus in accordance with the invention comprises a lifting device operating on two fork shelves. Each fork shelf is designed to support and carry at least two wheels in an upright position and is provided with support means designed to support the wheels in the upright position. Both fork shelves extend in a substantially horizontal direction. In accordance with the invention both shelves can be raised to approximately the same height to facilitate the transfer of the wheels from the shelves to the storage rack even though a first fork shelf is operated as an upper fork shelf and a second fork shelf is operated as a lower fork shelf.

In use an operator or a driver sets the first as well as the second fork shelf to a lowest position and mounts two wheels on the upper fork shelf in a transport position. The driver then actuates the lifting device to raise the upper fork shelf while the lower fork shelf is maintained in the lowest position. When the upper fork shelf is in the higher position a distance is created to the lower fork shelf. The distance is sufficient to allow two more wheels to be mounted on the lower fork shelf also in the upright position.

When both fork shelves are loaded with wheels at least the upper fork shelf is raised until it reaches an appropriate height in relation to a storage rack where the wheels arranged on the first fork shelf can be unloaded. After unloading the wheels from the upper fork shelf the lower fork shelf is raised to approximately the height at which the upper fork shelf was unloaded. In various embodiments the upper fork shelf is pivoted at least 90° from the horizontal position to a raised resting position after being unloaded. As a result the lower fork shelf can be raised to a position substantially corresponding to the height at which the upper fork shelf was unloaded.

Then the wheels from the lower fork shelf are unloaded accordingly. During all movements and transfer of the wheels both during loading and unloading the wheels rolled and no lifting of the wheels is required. A suitable working position for the operator is also maintained during the complete process.

The unloading of wheels from the storage rack is performed in the same way in the reverse order. Wheels are rolled from the storage rack to the lower fork shelf positioned in line with the storage rack while the upper fork shelf is in the raised position. The lower fork shelf then is lowered to a position where an upper section of the wheels is below the upper fork shelf when again positioned in the horizontal position. In this position wheels can be rolled over from the storage rack to the upper fork shelf. Then both fork shelves are lowered to an unloading position.

In the unloading position the lower fork shelf normally is in the lowermost position where the wheels are rolled of the fork shelf. The upper fork shelf then also is lowered to the lowermost position and wheels supported thereon can be rolled of accordingly.

In various embodiments the lifting device comprises a winch powered by an electric motor. A wire or a belt is attached to a cylinder or roll and runs over a plurality of pulley wheels or cylinders. One cylinder is connected to the upper fork shelf and a further cylinder is connected to the lower fork shelf. Each of the shelves is mounted on a carriage that is moved in a sliding movement on a vertically extending guide when the winch is operated.

In various embodiments the lifting device in accordance with the invention is arranged on a telescopic beam of a hoist. The hoist also comprises a lift cage arranged on an upper section of a periscopic beam together with said lifting device.

When both fork shelves are loaded with wheels the lift cage supporting the operator is also raised so as to achieve a suitable working height for the operator when unloading the wheels from the upper fork shelf. The lift cage is kept at an unloading position. Both fork shelves will accompany the lift cage during this process.

In various embodiments a loop is formed by the belt or wire and a section of the belt or wire is attached to a rotating wheel of the winch. The belt runs over a plurality of pulley wheels and when the wheel of the winch is rotated the belt is winded up thereon and the section of the belt running over the cylinders is shortened. As a result the cylinders connected to the fork shelves will be moved. The movement will be restricted to a vertical movement along the telescopic beam. A linear controlling device such as a guide or similar device arranged on the beam will control the movement.

It is possible to lock both fork shelves in horizontal positions along the beam. When one fork shelf is locked and the winch is operated the winding of the belt will result in a movement of the non-locked fork shelf at a higher speed. By locking the lower fork shelf in a lower position until the upper fork shelf is pivoted to the resting a safety arrangement can be implemented. It would then not be possible to raise the lower fork shelf to an interfering position close to the upper fork shelf while the upper fork shelf still is supporting wheels. In the interfering position tyres on the lower fork shelf could hit tyres on the upper fork shelf and move them from the safe transport position in an unpredictable way.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic side elevation view of one embodiment of a device in accordance with the invention,
- Fig. 2: is a schematic top section of a further embodiment of a device in accordance with the invention,
- Fig. 3: is a schematic perspective view of the top section of Fig. 2 showing also fork shelves,

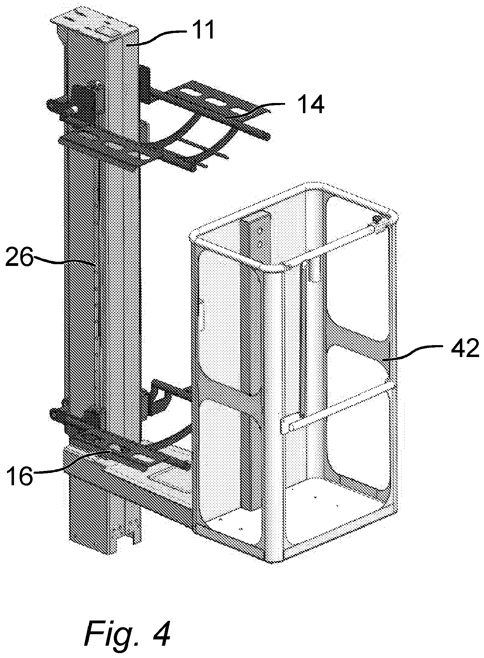

- Fig. 4: is a schematic perspective view of the top section of Fig. 3 showing also a lift cage,
- Fig. 5: is a schematic perspective view of a hoist with a handling device in an upper unloading position, and
- Fig. 6: shows the hoist of Fig. 5 when an upper fork shelf has been unloaded and raised to a resting position.

### DETAILED DESCRIPTION

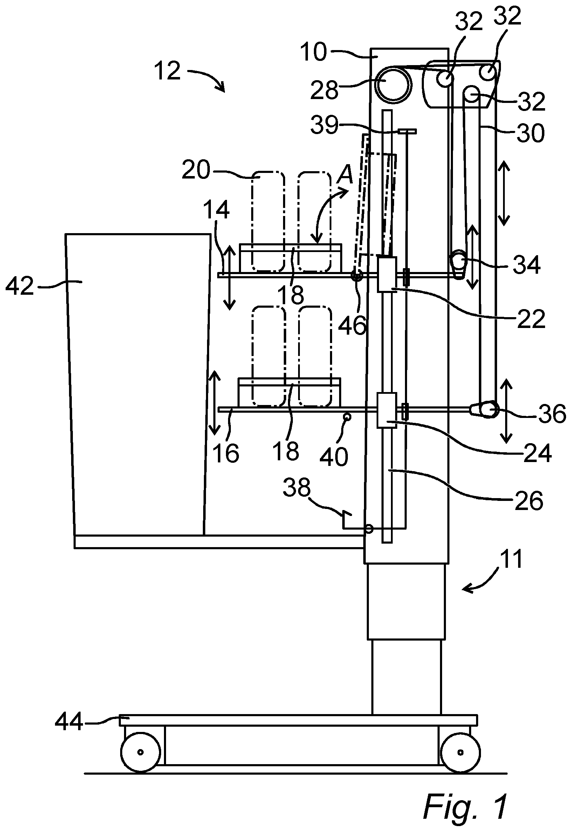

In Fig. 1 a device for handling tyres 20 in accordance with the invention is arranged on an upper section 10 of a telescopic beam 11 of a hoist 12. A first vertically displaceable fork shelf 14 and a second vertically displaceable fork shelf 16 form together a vertically displaceable support for tyres. In an operating position said first vertically displaceable fork shelf 14 and said second vertically displaceable fork shelf 16 extend in a substantially horizontal direction and comprises support means 18 for supporting tyres or wheels in an upright position.

Said first vertically displaceable fork shelf 14 is connected to and supported by a first carriage 22 and said second vertically displaceable fork shelf 16 is connected to and supported by a second carriage 24. Said first carriage 22 and said second carriage 24 are displaceable in a vertical direction along a guide 26. A winch comprising a motor and a first wheel 28 is arranged in the upper section 10. An endless wire or belt 30 is attached to said first wheel 28 and will be winded up on and winded off from, respectively, the first wheel when the motor is operated.

The endless belt 30 extends over a plurality of directing pulley wheels 32 and over a first end pulley wheel 34 and over a second end pulley wheel 36 and back to the first wheel 28. Said first end pulley wheel 34 is attached to said first vertically displaceable fork shelf 14 and said second end pulley wheel 36 is attached to said second vertically displaceable fork shelf 16. As a result when the motor rotates said first wheel 28 and the endless belt 30 is wound up thereon the endless belt 30 is shortened and said first end pulley wheel 34 and said second end pulley wheel 36 will be pulled upwards while rotating. As a result also the corresponding fork shelves will be displaced in the vertical direction.

Said second vertically displaceable fork shelf 16 is provided with a locking means for locking it in a lower loading position. In the embodiment shown in Fig. 1 the locking means comprises a hook 38 and a yoke 40. When the locking means is engaged in the lower loading position a winding operation of the first wheel 28 will pull only the first end pulley wheel 34 upwards while only rotating said second end pulley wheel 36. Correspondingly, when the first vertically displaceable fork shelf 14 has come to a top end position and cannot be further moved upwardly only the second end pulley wheel 36 will be pulled upwards while only rotating the first end pulley wheel 34. When one of the end pulley wheels is locked the free end pulley wheel will move with a higher speed.

When the first vertically displaceable fork shelf 14 has reached a top position it can be pivoted around a hinge 46 from a tyre supporting position to a raised resting position as shown by a dash and dot line in Fig. 1. The direction of rotation is indicated by arrow *A*. An abutment and a release element 39 are arranged at the top position. When the first vertically displaceable fork shelf 14 has reached the top position the release element 39 is touched. As a result the locking mechanism comprising the hook 38 and the yoke 40 can automatically released.

In the embodiment shown in Fig. 1 a lift cage 42 is also attached to the upper section 10 of a telescopic beam 11. The hoist 12 also comprises a support and drive device 44. Batteries or other power supply units can be provided in said support and drive device 44.

In various embodiments the invention relates to a method using two fork shelves for wheels/tyres. Said fork shelves can be moved simultaneously and individually by means of a motor winch. An upper fork shelf can be pivoted so as to allow a lower fork shelf to reach the same position as said lower fork shelf. The motor winch raises both fork shelves until said upper fork shelf reaches an end position against an abutment and thereafter said lower fork shelf can continue to a height that is in level with said upper fork shelf on the condition that said upper fork shelf has been pivoted to a raised position (after having been unloaded).

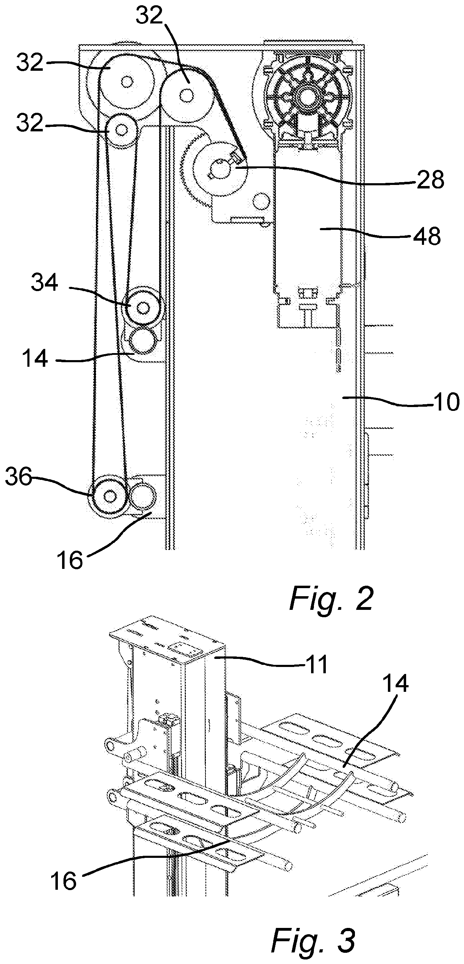

In the embodiment shown in Fig. 2 only an upper section 10 of the telescopic beam 11 is shown. The first wheel 28 is driven by a motor 48 and a gear box (not shown). The endless belt 30 extends from the first wheel 28 over a plurality of directing pulley wheels 32 down to said first end pulley wheel 34. Then the endless belt 30 runs up over another directing pulley wheel and down to said second end pulley wheel 36. As previously set out said first end pulley wheel 34 is connected to said first vertically displaceable fork shelf 14 and said second end pulley wheel 36 is connected to said second vertically displaceable fork shelf 16.

In the embodiment shown in Fig. 3 said first vertically displaceable fork shelf 14 and said second vertically displaceable fork shelf 16 have reached an upper position. After pivoting the first vertically displaceable fork shelf 14 it is possible for the second vertically displaceable fork shelf 16 to reach the same vertical position.

Fig. 3 shows the lift cage 42. The first vertically displaceable fork shelf 14 is in an upper position while the second vertically displaceable fork shelf 16 is positioned in a lower loading position. No wheels are supported on the fork shelves. The guide 26 is arranged on the upper section 10 of the telescopic beam.

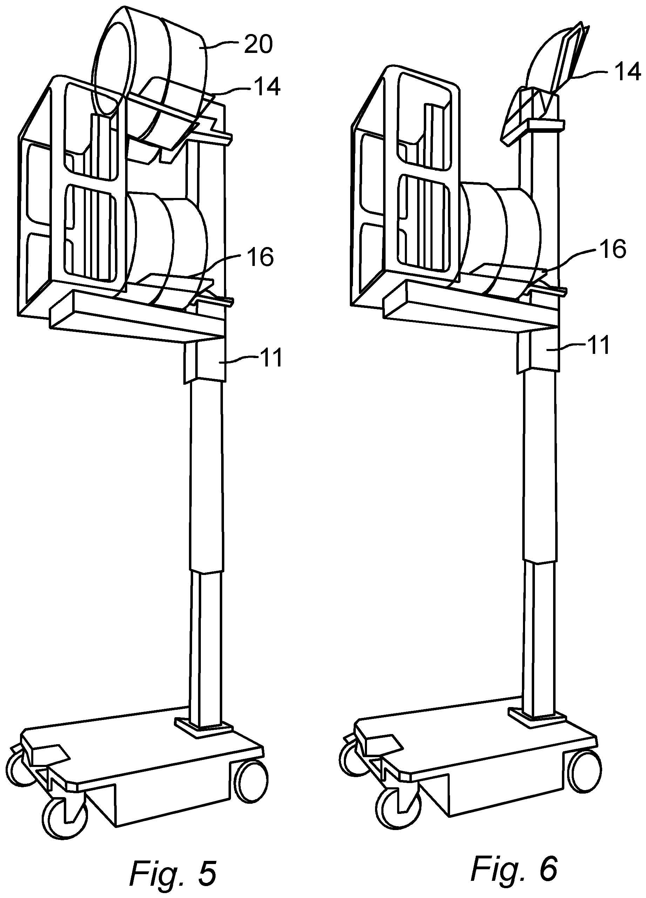

In Fig. 5 the first vertically displaceable fork shelf 14 is in an upper unloading position where an operator (not shown) easily can roll the two upper tyres 20 over to a storage rack (not shown) at the same vertical position. The second vertically displaceable fork shelf 16 is positioned in a lower position supporting two further tyres.

In Fig. 6 the two upper tyres have been rolled over to the storage rack and the first vertically displaceable fork shelf 14 has been pivoted to an upright position. In this position the locking means of the second vertically displaceable fork shelf 16 can be automatically released so as to allow the second vertically displaceable fork shelf 16 supporting two tyres to be vertically displaced to the unloading position.

In various embodiments the invention relates to two fork shelves mounted on carriages. Said carriages are connected to a winch extending with a belt/wire from a motor winch to an upper carriage, around a first pulley wheel, further up to a second pulley wheel at an upper section of a beam and further down to a lower carriage. A locking means is provided to prevent an unintentional movement of a lower fork shelf.

While certain illustrative embodiments of the invention have been described in particularity, it will be understood that various other modifications will be readily apparent to those skilled in the art. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. A method of handling tyres (20) or wheels, comprising loading the tyres (20) on a vertically displaceable support and manually unloading tyres (20) from the support to a storage rack by an operator, ***characterised* by** the steps
loading a first set of tyres (20) on a first shelf (14) in an upright position,
vertically displacing said first shelf (14) at least a distance corresponding to the diameter of the tyres (20),
loading a second set of tyres on a second shelf (16) in an upright position,
vertically displacing said first shelf (14) to an unloading height,
raising a lift cage (42) supporting the operator to a working height for unloading the tyres (20),
manually rolling the tyres (20) of said first set of tyres over to the storage rack,
further displacing said first shelf (14) so as to give space to said second shelf (16),
vertically displacing said second shelf (16) to said unloading height and manually rolling the tyres of said second set of tyres over to the storage rack.

2. A method as claimed in claim 1, further comprising
pivoting said first shelf (14) at least to an upright position when leaving space to said second shelf (16).

3. A method as claimed in claim 1, further comprising
preventing said second shelf (16) from vertical displacement to said unloading height until said first shelf has been displaced to give space to said second shelf (16).

4. A method as claimed in claim 3, further comprising
preventing said second shelf (16) from vertical displacement to said unloading height until said first shelf (14) has been rotated at least to an upright position when giving space to said second shelf (16).

5. A method as claimed in anyone of claims 1-4, further comprising
locking said second shelf (16) from vertical displacement while said first shelf (14) is vertically displaced to said unloading height.

6. A method as claimed in anyone of claims 1-4, further comprising
locking said first shelf (14) from vertical displacement while said second shelf (16) is vertically displaced to said unloading height.

7. A device for handling tyres, comprising a hoist (12), a lift cage (42) for an operator, and a lifting device having a vertically displaceable support, ***characterised* by**
a first vertically displaceable shelf (14) and a second vertically displaceable shelf (16), said first vertically displaceable shelf (14) and said second vertically displaceable shelf (16) having support means (18) to support tyres (20) in an upright position,
a first carriage (22) supporting said first shelf (14) and a second carriage (24) supporting said second shelf (16),
a drive means operating on said first carriage (22) and said second carriage (24) for vertically and individually displacing said first carriage (22) and said second carriage (24) to an unloading height,
said first vertically displaceable shelf (14) having a first supporting position and a second rest position, said rest position leaving space for the second shelf (16) to reach said unloading height.

8. A device as claimed in claim 7, also comprising
a first releasable locking means for preventing said first shelf (14) from vertical displacement,
a second releasable locking means for preventing said second shelf (16) from vertical displacement.

9. A device as claimed in claim 7, wherein
said first vertically displaceable shelf (14) comprises a hinge (46) for pivoting said first shelf (14) at least to an upright position when leaving space to said second shelf (16).

10. A device as claimed in claim 7, wherein said drive means comprises a motor driving a first wheel (28), said device further comprising
an endless belt (30) or wire attached to said first wheel (28) to be winded up thereon when said first wheel (28) is rotated, said endless belt (30) extending over a plurality of pulley wheels (34, 36), a first pulley wheel (34) being connected to said first carriage (22) and a second pulley (36) wheel being connected to said second carriage (24), said first carriage and said second carriage being vertically displaced when said endless belt (30) is winded up on said first wheel (28).

11. A device as claimed in claim 9, also comprising a plurality of directing pulley wheels (32) arranged to direct said endless belt (30) to extend in a substantially vertical direction to said first pulley wheel (34) and to said second pulley wheel (36).

12. A device as claimed in claim 7, also comprising guide means (26) guiding said first carriage (22) and said second carriage (24) to move in a substantially vertical direction.

## Patentansprüche

1. Verfahren zur Handhabung von Reifen (20) oder Rädern umfassend das Verladen der Reifen (20) auf eine vertikal verschiebbare Auflage und das manuelle Abladen der Reifen (20) von der Auflage zu einem Lagerregal durch einen Bediener, **gekennzeichnet durch** die Schritte
Verladen eines ersten Satzes von Reifen (20) auf eine erste Ablage (14) in aufrechter Position,
vertikales Verschieben der ersten Ablage (14) um mindestens einen Abstand, der dem Durchmesser der Reifen (20) entspricht,
Verladen eines zweiten Satzes von Reifen auf eine zweite Ablage (16) in einer aufrechten Position,
vertikales Verschieben der ersten Ablage (14) auf eine Abladehöhe,
Anheben eines Fahrkorbs (42), die den Bediener trägt, auf eine Arbeitshöhe zum Abladen der Reifen (20),
manuelles Rollen der Reifen (20) des ersten Satzes von Reifen zu dem Lagerregal,
weiteres Verschieben der ersten Ablage (14) um der zweiten Ablage (16) Raum zu schaffen,
vertikales Verschieben der zweiten Ablage (16) auf die Abladehöhe und manuelles Rollen der Reifen des zweiten Satzes von Reifen zu dem Lagerregal.

2. Verfahren nach Anspruch 1, das des Weiteren umfasst:
Drehen der ersten Ablage (14) mindestens in eine aufrechte Position, wenn der zweiten Ablage (16) Raum gelassen wird.

3. Verfahren nach Anspruch 1, das des Weiteren umfasst:
Verhindern des vertikalen Verschiebens der zweiten Ablage (16) auf die Abladehöhe, bis die erste Ablage verschoben wurde, um Raum für die zweite Ablage (16) zu schaffen.

4. Verfahren nach Anspruch 3, das des Weiteren umfasst:
Verhindern des vertikalen Verschiebens der zweiten Ablage (16) auf die Abladehöhe, bis die erste Ablage (14) mindestens in eine aufrechte Position gedreht wurde, um Raum für die zweite Ablage (16) zu schaffen.

5. Verfahren nach einem der Ansprüche 1 bis 4, das des Weiteren umfasst:
Verriegeln der zweiten Ablage (16) gegen das vertikale Verschieben, solange die erste Ablage (14) vertikal auf die Abladehöhe verschoben wird.

6. Verfahren nach einem der Ansprüche 1 bis 4, das des Weiteren umfasst:
Verriegeln der ersten Ablage (14) gegen das vertikale Verschieben, solange die zweite Ablage (16) vertikal auf die Abladehöhe verschoben wird.

7. Vorrichtung zur Handhabung von Reifen mit einer Hebevorrichtung (12), einem Fahrkorb (42) für einen Bediener und einer Hebeeinrichtung mit einem vertikal verschiebbaren Träger, **gekennzeichnet durch**
eine erste vertikal verschiebbare Ablage (14) und eine zweite vertikal verschiebbare Ablage (16), wobei die erste vertikal verschiebbare Ablage (14) und die zweite vertikal verschiebbare Ablage (16) Haltevorrichtungen (18) aufweisen, um die Reifen (20) in einer aufrechten Position zu halten,
einen ersten Schlitten (22), die die erste Ablage (14) trägt, und einen zweiten Schlitten (24), der die zweite Ablage (16) trägt,
eine Antriebsvorrichtung, die den ersten Schlitten (22) und den zweiten Schlitten (24) betätigt, um den ersten Schlitten (22) und den zweiten Schlitten (24) vertikal und einzeln auf die Abladehöhe zu verschieben,
wobei die erste vertikal verschiebbare Ablage (14) eine erste Trägerposition und eine zweite Ruheposition aufweist, wobei die Ruheposition einen Raum für die zweite Ablage (16) frei lässt, um die Abladehöhe zu erreichen.

8. Vorrichtung nach Anspruch 7, die des Weiteren aufweist:
eine erste lösbare Verriegelungsvorrichtung, um das vertikale Verschieben der ersten Ablage (14) zu verhindern,
eine zweite lösbare Verriegelungsvorrichtung, um das vertikale Verschieben der zweiten Ablage (16) zu verhindern.

9. Vorrichtung nach Anspruch 7, wobei
die erste vertikal verschiebbare Ablage (14) ein Gelenk (46) zum Drehen der ersten Ablage (14) mindestens in eine aufrechte Position aufweist, wenn sie Raum für die zweite Ablage (16) lässt.

10. Vorrichtung nach Anspruch 7, wobei die Antriebsvorrichtung einen Motor aufweist, der ein erstes Antriebsrad (28) antreibt, und die des Weiteren aufweist:
ein Endlosband (30) oder Seil, das an dem ersten Antriebsrad (28) angebracht ist, um davon aufgewickelt zu werden, wenn das erste Antriebsrad (28) sich dreht, wobei sich das Endlosband (30) über eine Mehrzahl von Umlenkrollen (34, 36) erstreckt, wobei eine erste Umlenkrolle (34) mit dem ersten Schlitten (22) und eine zweite Umlenkrolle (36) mit dem zweiten Schlitten (24) verbunden ist, wobei der erste Schlitten und der zweite Schlitten vertikal verschoben werden, wenn das Endlosband (30) auf dem ersten Antriebsrad (28) aufgewickelt wird.

11. Vorrichtung nach Anspruch 9, die des Weiteren eine Mehrzahl von Richtungsumlenkrollen (32) aufweist, die angeordnet sind, um das Endlosband (30) zu führen, so dass es sich in einer im Wesentlichen vertikalen Richtung zu der ersten Umlenkrolle (34) und der zweiten Umlenkrolle (36) erstreckt.

12. Vorrichtung nach Anspruch 7, die des Weiteren eine Führungsvorrichtung (26) aufweist, die den ersten Schlitten (22) und den zweiten Schlitten (24) führt, so dass sie sich in einer im Wesentlichen vertikalen Richtung bewegen.

## Revendications

1. Méthode de manipulation de pneumatiques (20) ou de roues, comprenant le chargement de pneumatiques (20) sur un support à déplacement vertical et le déchargement manuellement des pneumatiques (20) depuis le support vers un râtelier de stockage par un opérateur, **caractérisée par** les étapes suivantes :
chargement d'un premier ensemble de pneumatiques (20) sur une première tablette (14), en position verticale ;
déplacement vertical de ladite première tablette (14) d'une distance correspondant au moins au diamètre des pneumatiques (20) ;
chargement d'un deuxième ensemble de pneumatiques sur une deuxième tablette (16), en position verticale ;
déplacement vertical de ladite première tablette (14) jusqu'à une hauteur de déchargement,
en levant une cage d'ascenseur (42) portant l'opérateur jusqu'à une hauteur de travail pour le déchargement des pneumatiques (20) ;
roulage manuel des pneumatiques (20) dudit premier ensemble de pneumatiques vers le râtelier de stockage ;
nouveau déplacement de ladite première tablette (14) de manière à laisser la place à ladite deuxième tablette (16) ;
déplacement vertical de ladite deuxième tablette (16) jusqu'à ladite hauteur de déchargement et roulage manuel des pneumatiques dudit deuxième ensemble de pneumatiques vers le râtelier de stockage.

2. Méthode selon la revendication 1, comprenant en outre
le pivotement de ladite première tablette (14) au moins en position verticale pour laisser la place à ladite deuxième tablette (16).

3. Méthode selon la revendication 1, comprenant en outre
le blocage du déplacement vertical de ladite deuxième tablette (16) jusqu'à ladite hauteur de déchargement tant que ladite première tablette n'a pas été déplacée pour laisser la place à ladite deuxième tablette (16).

4. Méthode selon la revendication 3, comprenant en outre
le blocage du déplacement vertical de ladite deuxième tablette (16) jusqu'à ladite hauteur de déchargement tant que ladite première tablette (14) n'a pas été basculée au moins en position verticale pour laisser la place à ladite deuxième tablette (16).

5. Méthode selon l'une des revendications 1-4, comprenant en outre
le verrouillage du déplacement vertical de ladite deuxième tablette (16) pendant le déplacement vertical de ladite première tablette (14) jusqu'à ladite hauteur de déchargement.

6. Méthode selon l'une des revendications 1-4, comprenant en outre
le verrouillage du déplacement vertical de ladite première tablette (14) pendant le déplacement vertical de ladite deuxième tablette (16) jusqu'à ladite hauteur de déchargement.

7. Dispositif pour la manipulation des pneumatiques, comprenant un appareil de levage (12), une cage d'ascenseur (42) pour un opérateur et un dispositif de levage disposant d'un support à déplacement vertical, **caractérisé par**
une première tablette à déplacement vertical (14) et une deuxième tablette à déplacement vertical (16), ladite première tablette à déplacement vertical (14) et ladite deuxième tablette à déplacement vertical (16) disposant de supports (18) pour maintenir les pneumatiques (20) en position verticale ;
un premier plateau (22) supportant ladite première tablette (14) et un deuxième plateau (24) supportant ladite deuxième tablette (16) ;
un mécanisme d'entraînement sur ledit premier plateau (22) et ledit deuxième plateau (24) pour le déplacement vertical et individuel dudit premier plateau (22) et dudit deuxième plateau (24) jusqu'à une hauteur de déchargement ;
ladite première tablette à déplacement vertical (14) ayant une première position de support et une deuxième position de repos, ladite position de repos laissant la place à la deuxième tablette (16) pour atteindre ladite hauteur de déchargement.

8. Dispositif selon la revendication 7, comprenant également
un premier mécanisme de verrouillage amovible pour empêcher le déplacement vertical de ladite première tablette (14),
un deuxième mécanisme de verrouillage amovible pour empêcher le déplacement vertical de ladite deuxième tablette (16).

9. Dispositif selon la revendication 7, **caractérisé en ce que**
ladite première tablette à déplacement vertical (14) comprend une charnière (46) pour le pivotement de ladite première tablette (14) au moins en position verticale pour laisser la place à ladite deuxième tablette (16).

10. Dispositif selon la revendication 7, **caractérisé en ce que** ledit mécanisme d'entraînement comprend un moteur entraînant une première roue (28), ledit dispositif comprenant également
une courroie sans fin (30) ou un câble fixé sur ladite première roue (28) qui s'enroule autour de celle-ci lorsque ladite première roue (28) tourne, ladite courroie sans fin (30) passant sur plusieurs réas (34, 36), un premier réa (34) étant connectée audit premier plateau (22) et un deuxième réa (36) étant connecté audit deuxième plateau (24), ledit premier plateau et ledit deuxième plateau se déplaçant verticalement lorsque ladite courroie sans fin (30) s'enroule autour de ladite première roue (28).

11. Dispositif selon la revendication 9, comprenant également plusieurs réas directeurs (32) disposés de manière à diriger ladite courroie sans fin (30) dans une direction substantiellement verticale jusqu'audit premier réa (34), et jusqu'audit deuxième réa (36).

12. Dispositif selon la revendication 7, comprenant également un mécanisme de guidage (26) guidant ledit premier plateau (22) et ledit deuxième plateau (24) pour un déplacement dans une direction substantiellement verticale.
